# EUROPEAN PATENT APPLICATION

(11) **EP 2 544 359 A1**
(43) Date of publication of application: **09.01.2013**
(21) Application number: 11172512.3
(22) Date of filing: 04.07.2011
(51) Int. Cl.: H02P 9/48

(54) **Method for controlling a variable speed generator**

(71) Applicant: ABB Oy, 00380 Helsinki (FI)
(72) Inventor: Kanerva, Sami, 01690 Vantaa (FI)
(74) Representative: Westerholm, Carl Christian

(57) **Abstract**

A method for controlling a variable speed generator (20) in a system comprising a primary engine (10), a variable speed generator (20) driven by the primary engine (10), an excitation circuit (40) controlling the variable speed generator (20), a control circuit (50) controlling the excitation circuit (40), a thyristor rectifier (30) being connected to the stator of the variable speed generator (20), said thyristor rectifier (30) producing DC power from the AC power generated by the variable speed generator (20). The method comprises the steps of measuring the rotation speed (N), the voltage (U) and the current (I) of the variable speed generator (20), regulating the excitation circuit (40) with the control circuit (50) so that the voltage (U) of the variable speed generator (20) remains constant at a predetermined value in a predetermined rotation speed interval.

## Description

The invention relates to a method according to the preamble of claim 1.

Variable speed generators are used e.g. in ships. The variable speed generator is connected to the shaft of a primary engine e.g. a diesel engine. A rectifier is further connected to the stator of the variable speed generator in order to convert the alternating current (AC) produced by the variable speed generator into direct current (DC). The rotation speed of the diesel engine is regulated in a predetermined interval based on the load of the variable speed generator. The diesel engine is driven at nominal rotation speed when the variable speed generator is working at its maximum load. When the load of the variable speed generator is reduced then the rotation speed of the primary engine is reduced in order to operate the primary engine at optimal efficiency.

An active voltage source inverter (VSI) rectifier might be considered to form an optimal benchmark in connection with a variable speed generator. This is due to the fact that it would probably constitute the most obvious and intuitively optimum choice for a variable speed generator with a constant DC voltage bus. Thyristor rectifiers and diode rectifiers are, however, much cheaper and simple compared to a VSI rectifier. There are thus good reasons for using thyristor rectifiers or diode rectifiers with a variable speed generator with a constant DC voltage bus.

### BACKGROUND ART

WO publication 2010/060777 discloses a plurality of generator systems each comprising a variable speed generator and a rectifier supplying a DC bus. The rectifier converts the AC produced by the variable speed generator into a DC. The rectifier is preferable a thyristor rectifier.

In prior art methods a predefined speed interval e.g. 50 to 100% of the maximum speed of the primary engine is first set based on the load characteristics of the primary engine. This is the speed interval where the primary engine operates at optimal efficiency in relation to the load of the variable speed generator. Then a voltage e.g. in the range of 65 to 100% of the maximum voltage of the DC network is set. This DC voltage is then kept constant by the rectifier in the predefined speed interval 50 to 100% of the maximum speed. The AC voltage produced by the variable speed generator will, however, vary depending on the rotation speed of the generator. This means that the rectifier controls the DC voltage when the AC voltage is in the interval 50 to 100% of the nominal AC voltage i.e. when the primary engine operates in the speed interval of 50 to 100% of the maximum speed. The DC voltage is cut by increasing the firing angle of the rectifier.

### SUMMARY OF THE INVENTION

The object of the invention is to achieve a more efficient control of a variable speed generator in a predefined rotation speed interval.

The method according to the invention is characterized by the features in the characterizing portion of claim 1.

Excitation control (field weakening) is used to keep the variable speed generator voltage constant in a predefined operating range, typically 50 to 100% of the rated speed. Therefore the variable speed generator operates at reduced flux in the operating range ranging from the minimum rotation speed Nₘᵢₙ to the maximum rotation speed Nₘₐₓ. The fact that the generator operates at reduced flux in the operating range does not, however, effect the stator current level compared to a prior art control method where the rectifier controls the DC voltage. The reason is that the rectifier automatically sets the active and reactive current balance of the AC side to maintain the DC current level. As a result, the field current rating can be much lower than it would be at full voltage.

At the low end of the operating range the excitation must be increased, but the stator current decreases because the power consumed by the DC network is reduced at lower speed. Through the armature reaction this also reduces the field current, and finally the "full" field current is not needed at any of the operation points in the operation range.

Resulting from the control principle of the voltage and the speed, the variable speed generator can be dimensioned for a smaller rotor current than normally and also the excitation losses are smaller. Other benefits of the concept are that there are no specific requirements on the reactance level etc. because of the short circuit current or voltage distortion. Also the nominal frequency can be selected rather freely.

The rectifier connected to the stator of the variable speed generator is advantageously a thyristor rectifier, but a diode rectifier could also be used.

### BRIEF DESCRIPTION OF THE DRAWINGS

Some specific embodiments of the invention are described in the following in detail with reference to the accompanying figures, in which:
Figure 1 shows a variable speed generator to be controlled according to the invention.
Figure 2 shows several variable speed generators connected in parallel and supplying a switchboard.
Figure 3 shows operational characteristics of a thyristor rectifier.
Figures 4 shows the voltage and the power characteristics of the variable speed generator.
Figure 5 shows illustrations of the voltage, the power and the stator current for a prior art generator design and the inventive generator design.
Figure 6 shows a vector diagram of the variable speed generator in an operation point where the power factor is 0.8.
Figure 7 shows a rotor current estimate for a prior art generator design and the inventive generator design according to the vector diagram analysis in figure 6.

### DETAILED DESCRIPTION OF SOME SPECIFIC EMBODIMENTS

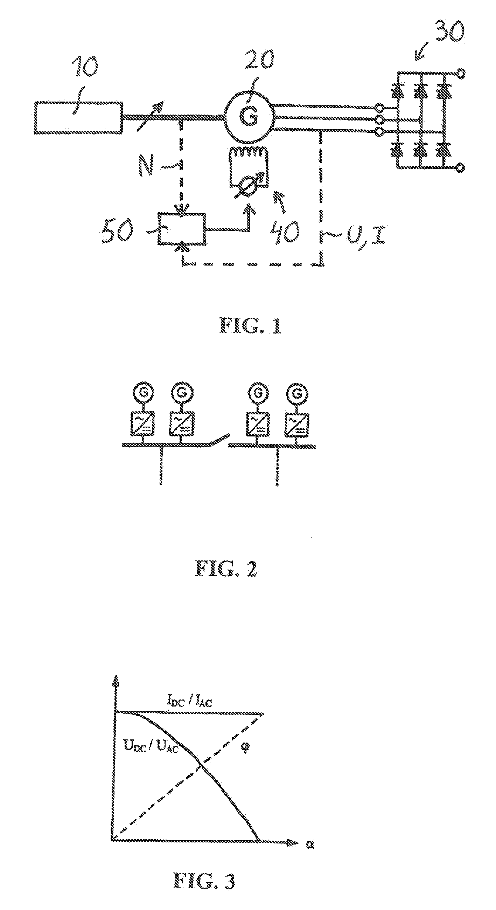

Figure 1 shows a variable speed generator to be controlled according to the invention. The system comprises a primary engine 10 driving a variable speed AC (alternating current) generator 20. The variable speed generator 20 is further provided with an excitation circuit 40 for controlling the output of the variable speed generator 20. The excitation circuit 40 regulates the exciting current to the variable speed generator 20 and in this way the output voltage of the variable speed generator 20. The system further comprises a thyristor rectifier 30 connected to the stator of the variable speed generator 20. The thyristor rectifier 30 produces a DC (direct current) from the AC current produced by the variable speed generator 20.

The arrangement further comprises a control circuit 50 for controlling the excitation circuit 40. The control circuit 50 receives as measurement signals the rotation speed N, the voltage U and the current I of the variable speed generator 20.

The aim is to drive the primary engine 10 at an optimal rotation speed in relation to the electrical load of the variable speed generator. The optimal rotation speed for each electrical load in view of minimizing the fuel consumption of the primary engine 10 can be determined based on speed-power curves including fuel consumption for said primary engine 10. The speed of the primary engine is thus controlled according to the electrical load of the variable speed generator in order to retain the efficiency of the primary engine at an optimal level.

Figure 2 shows several variable speed generators connected in parallel and supplying a switchboard. The system in this figure shows a power plant with several variable speed generators supplying a switchboard that is divided into two parts with a switch. Each of the variable speed generators can be controlled by the method according to the invention.

Figure 3 shows operational characteristics of a thyristor rectifier. The DC voltage level at the output of the thyristor rectifier is controlled by the firing angle α of the thyristor rectifier. In order for the thyristor rectifier to operate properly, the AC voltage of the variable speed generator must be high enough and the variable speed generator must be able to supply reactive power to the thyristor rectifier. The ratio between the DC and AC voltages decreases with increasing firing angels α, and the AC current turns increasingly reactive. The ratio between the DC and AC currents is independent of the firing angle α, since the power balance is fixed by the power factor, i.e. cos(ϕ), where ϕ is the phase shift between the current and the voltage.

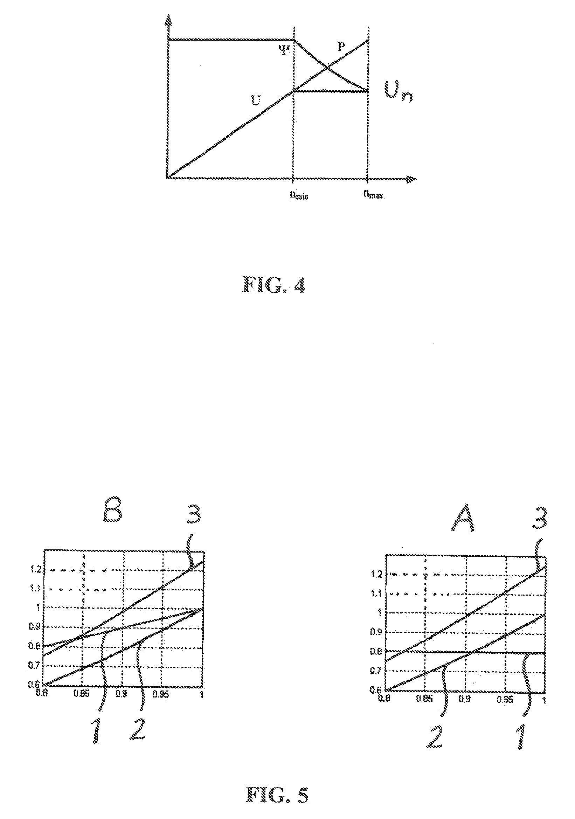

Figures 4 shows the voltage and the power characteristics of the variable speed generator. The nominal voltage Uₙ of the generator is defined by means of the DC voltage level and the minimum speed Nₘᵢₙ in the operation region Nₘᵢₙ to Nₘₐₓ.

When the variable speed generator operates at the minimum speed Nₘᵢₙ, the output voltage of the variable speed generator should be sufficient to produce the required DC voltage at zero firing angle in the thyristor rectifier. The necessary margins for commutation and voltage variation are of course taken into account.

At speeds above the minimum speed Nₘᵢₙ, the field current i.e. the flux Ψ is respectively reduced so that the variable speed generator output voltage U still remains at the rated level Uₙ. In other words, the field weakening point is the minimum speed Nₘᵢₙ in the operation region. Accordingly the thyristor rectifier operates at the lowest possible firing angle through the whole operation region Nₘᵢₙ to Nₘₐₓ.

The voltage of the variable speed generator is preferably in the range of 65 to 100%, more preferably 80% of the maximum voltage. The rotational speed interval is preferably 50 to 100%, more preferably 65 to 100% of the nominal speed of the primary engine. One rough estimate is that the percentage of the voltage in relation to the maximum voltage should be approximately the same as the percentage of the minimum speed in relation to the nominal speed. The voltage of the variable speed generator must in practice be less than the maximum voltage as the invention is not in use when the voltage is the same as the maximum voltage. The upper limit is thus in practice less than 100% e.g. 95%.

Because of the constant voltage, the stator current is proportional to the power through the whole operation region. Accordingly the stator current rating at full power is higher that it would be if the voltage would increase linearly to 100%. In such a case, the use of the thyristor rectifier at constant DC voltage would also require a higher voltage level and increase the reactive current respectively. Therefore the actual stator current rating will not differ at all from the case without field weakening.

The rotor current in different operation points is determined by the flux level and the load. Compared to the situation with linearly increasing voltage, the field current rating is reduced because of field weakening at high speeds and reduced stator current (armature reaction) at low speeds.

As a result, the use of field weakening below the maximum power reduces the rotor current rating, but does not affect the stator current rating when used with a thyristor rectifier.

The benefits of the invention are shown in the following based on a comparison between two alternatives:
A denotes a DC link supplied with a thyristor rectifier, without the use of field weakening.
B denotes a DC link supplied with a thyristor rectifier with a constant AC voltage, i.e. a system according to the invention.

Figure 5 shows illustrations of the stator voltage, the power and the stator current for the two generator design alternatives A and B. The stator voltage, the power and the stator current are shown as a function of the rotation speed of the variable speed generator. The curve number 1 represents the stator voltage, the curve number 2 represents the power and the curve number 3 represents the stator current. The values are plotted in a per unit scale.

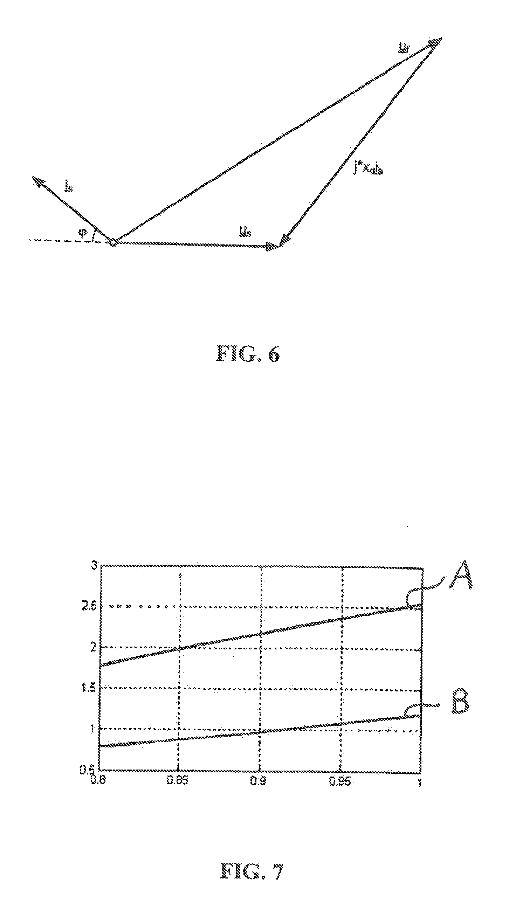

Figure 6 shows a vector diagram in an operation point where the power factor is 0.8. The vector diagram shows the stator voltage Uₛ, the stator current is, the synchronous reactance X_{d}, the voltage U_{f} induced by the field current and the power factor cos(ϕ). The rotor current of the design alternatives was estimated by means of a vector diagram, assuming a synchronous reactance of 250% (per unit) to account for the armature reaction. Although the required excitation in the vector diagram does not exactly correspond to the rotor current, it still provides an estimate for a rough comparison.

Figure 7 shows a rotor current estimate for the two generator design alternatives A and B according to the vector diagram analysis in figure 6. The rotor current is shown as a function of the rotation speed of the variable speed generator. The curve A represents the prior art thyristor rectifier design, the curve number B represents the inventive thyristor rectifier design.

The analysis shows a significant difference in the rotor current estimate between the design according to the invention B and the prior art design for a thyristor rectifier without the use of field weakening A. The rotor current is much lower in the inventive design B.

The use of the method according to the invention to control a variable speed generator connected to a rectifier makes it possible to use a smaller generator compared to prior art control methods. This means savings in the manufacture of the generator and in the use of the generator.

The examples of the embodiments of the present invention presented above are not intended to limit the scope of the invention only to these embodiments. Several modifications can be made to the invention within the scope of the claims.

## Claims

1. A method for controlling a variable speed generator (20) in a system comprising:
- a primary engine (10),
- an variable speed generator (20) driven by the primary engine (10),
- an excitation circuit (40) controlling the variable speed generator (20),
- a control circuit (50) controlling the excitation circuit (40),
- a rectifier (30) being connected to the stator of the variable speed generator (20), said rectifier (30) producing DC power from the AC power generated by the variable speed generator (20),
**characterized in that** the method comprises the steps of:
- measuring the rotation speed (N), the voltage (U) and the current (I) of the variable speed generator (20),
- regulating the excitation circuit (40) with the control circuit (50) so that the voltage (U) of the variable speed generator (20) remains constant at a predetermined value in a predetermined rotation speed interval.

2. A method according to claim 1, **characterized in that** the rectifier (30) is a thyristor rectifier.

3. A method according to claim 1 or 2, **characterized in that** the predetermined rotation speed interval is 50 to 100% of the nominal speed of the primary engine (10).

4. A method, according to any of claims 1-3, **characterized in that** the predetermined value of the voltage of the variable speed generator is in the range of 65 to 100% of the maximum voltage.
